# FASCICULE DE BREVET EUROPEEN

(11) **EP 0 449 687 B1**
(45) Date de publication et mention de la délivrance du brevet: **01.06.1994**
(21) Numéro de dépôt: 91400635.8
(22) Date de dépôt: 07.03.1991
(51) Int. Cl.: H02P 6/02

(54) **Procédé de commande d'un moteur synchrone autopiloté et dispositif pour sa mise en oeuvre**
Regelprozess eines selbstgeführten Synchronmotors und Vorrichtung zu seiner Verwendung
Control process of a self-piloted synchronous motor and device for using the same

(30) Priorité: 26.03.1990 FR 9003825
(43) Date de publication de la demande: 02.10.1991
(73) Titulaire: AUTOMOBILES PEUGEOT, 75116 Paris (FR); AUTOMOBILES CITROEN, 92200 Neuilly-sur-Seine (FR)
(72) Inventeur: Lajoie-Mazenc, Michel, F-31450 Montgiscard (FR); Cartignies, Michel, F-31320 Labege (FR); Cros, Jérome, F-31400 Toulouse (FR)
(74) Mandataire: Moncheny, Michel

(56) Documents cités:
- EP-A- 0 231 046
- GB-A- 2 217 934
- ANTRIEBSTECHNIK. vol. 27, no. 7, 1988, MAINZ DE page 330 "INTELLIGENT, VERSCHLEISSFREI, BETRIEBSTEMPERATURUNABHAENGIG: KOLLEKTORLOSER GLEICHSTROMMOTOR OHNE LAGESENSOR"
- PATENT ABSTRACTS OF JAPAN vol. 10, no. 309 (E-447)(2365) 21 octobre 1986, & JP-A-61 121793 (MATSUSHITA ELECTRIC IND. CO.) 09 juin 1986,
- PATENT ABSTRACTS OF JAPAN vol. 14, no. 216 (E-924)(4159) 08 mai 1990, & JP-A-02 051389 (SONY CORP) 21 février 1990,
- PATENT ABSTRACTS OF JAPAN vol. 13, no. 490 (E-841)(3838) 07 novembre 1989, & JP-A-01 194886 (TOSHIBA CORP) 04 août 1989,

## Description

La présente invention due à la collaboration du Laboratoire d'Electrotechnique et d'Electronique Industrielle de Toulouse concerne un moteur synchrone autopiloté à rotor à aimants permanents, alimenté par une source de tension continue avec alimentation bidirectionnelle des enroulements du stator. De tels moteurs sont utilisés en particulier dans les véhicules automobiles, par exemple pour entraîner un ventilateur, des essuie-glaces ou encore un lève-vitre.

Les trois enroulements de phase du stator sont alimentés, en modulation de largeur d'impulsion à fréquence fixe, par l'intermédiaire d'un onduleur comprenant des éléments semiconducteurs à conduction et extinction commandées.

Pour engendrer les signaux de commande des éléments semiconducteurs à vitesse variable, donc à fréquence variable, il faut détecter la position du rotor par rapport aux enroulements du stator.

Dans le cas d'un moteur triphasé et avec la commande envisagée, il y a toujours une phase qui n'est pas alimentée pendant que les deux autres le sont et il est connu de détecter la position du rotor en détectant le passage par zéro de la force électromotrice induite dans l'enroulement non alimenté.

Afin d'obtenir un fonctionnement au couple maximal pour un courant donné, il est nécessaire de déphaser les signaux de commande de l'onduleur d'un déphasage de 30 degrés par rapport à l'instant de passage à zéro de la force électromotrice induite dans l'enroulement non alimenté.

Le signal prélevé aux bornes d'un enroulement en vue de détecter le passage à zéro de la force électromotrice induite comporte de nombreux parasites dûs en particulier aux tensions induites par les courants dans les autres phases ; ce signal prélevé présente donc de nombreux passages à zéro et il faut pouvoir détecter le "bon" passage à zéro de ce signal prélevé, c'est-à-dire l'instant où la force électromotrice s'annule effectivement.

Un tel procédé et dispositif sont connus de l'art anterieur EP-A- 231 046, qui, toutefois, ne mentionne pas de modulation de largeur d'impulsion.

Il faut ensuite réaliser de manière fiable et peu coûteuse le déphasage de trente degrés du signal obtenu, cela pour une gamme de vitesses étendue.

L'invention se propose de réaliser un procédé et un dispositif de commande d'un moteur synchrone autopiloté du type décrit ci-dessus dans lequel on détecte de manière sûre le vrai passage à zéro de la force électromotrice induite et dans lequel le déphasage de trente degrés est obtenu de manière fiable et en utilisant le minimum de composants.

Le procédé de commande d'un moteur synchrone autopiloté selon l'invention est caractérisé en ce que le signal prélevé aux bornes de chaque enroulement de phase du stator est échantillonné avec synchronisation avec la fréquence de modulation de l'onduleur, le dispositif pour mettre en oeuvre ce procédé est defini par les caracteristiques de la revendication 8.

De cette manière, on réalise le filtrage des tensions induites parasites dûes aux commutations des éléments semiconducteurs reliés aux autres phases.

Selon une variante de l'invention, pour la détection du passage à zéro de la force électromotrice induite d'un enroulement, on réalise un masquage des périodes pendant lesquelles ledit enroulement est alimenté. Par ailleurs, on réalise également un masquage des instants de permutation de phase du stator; de cette manière, on ne surveille la tension aux bornes d'un enroulement que pendant la période utile pendant laquelle se produit le passage à zéro de la force électromotrice induite.

Le déphasage du signal du passage à zéro est obtenu par comptage d'impulsions d'horloge dans deux compteurs dont l'un reçoit le signal représentatif du passage à zéro et l'autre l'inverse de ce signal, le comptage divisé par deux d'un compteur étant comparé au comptage de l'autre compteur et inversement.

L'utilisation de deux compteurs permet d'obtenir un déphasage de trente degrés dans une large gamme de vitesses.

D'autres caractéristiques et avantages de l'invention ressortiront de la description qui suit d'un exemple de réalisation, faite en se référant aux dessins annexés sur lesquels :
- la figure 1 est un schéma général du circuit d'alimentation d'un moteur synchrone autopiloté ;
- les figures 2A et 2B représentent schématiquement une alimentation triphasée bidirectionnelle par onduleur et les périodes de commande des semiconducteurs de celui-ci ;
- les figures 3A et 3B illustrent le dispositif de masquage des périodes pendant lesquelles les enroulements sont alimentés ;
- les figures 4A et 4B illustrent un dispositif de masquage du même type dans lequel on obtient un signal unique ;
- la figure 5 est un diagramme montrant un détail de la tension prélevée aux bornes d'un enroulement non alimenté ;
- la figure 6 est un schéma synoptique du dispositif de détection du passage à zéro de la force électromotrice induite ;
- la figure 7 est un diagramme explicatif du schéma de la figure 6 ;
- la figure 8 est un diagramme de fonctionnement d'un déphaseur comportant deux compteurs ; et
- la figure 9 est un schéma synoptique du déphaseur à deux compteurs.

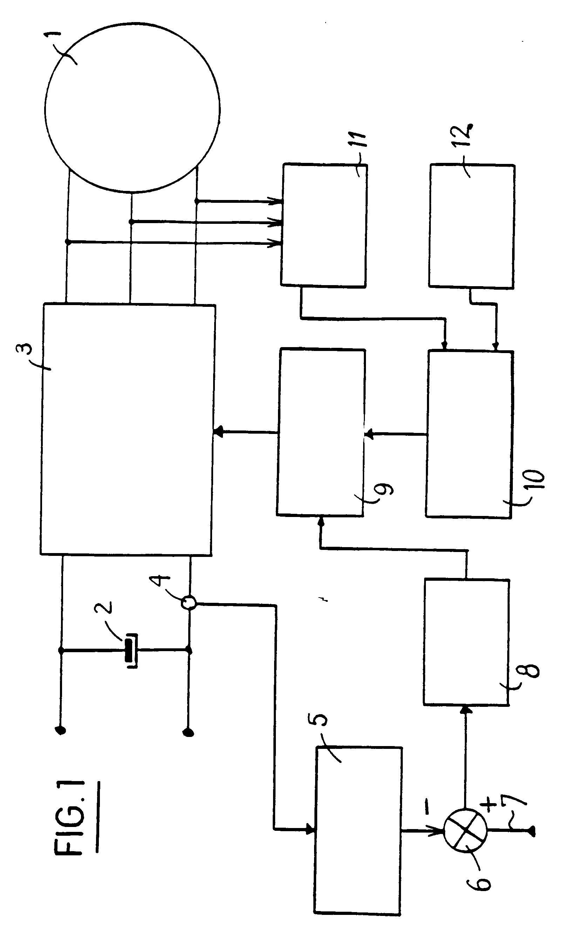

La figure 1 est un schéma synoptique général d'un moteur synchrone autopiloté 1 qui est alimenté à partir d'une source de tension continue 2, par exemple une batterie de véhicule automobile, par l'intermédiaire d'un onduleur 3. Le moteur 1 comporte un rotor à aimants permanents et un stator triphasé alimenté par l'onduleur 3. Le fonctionnement de ce moteur est régulé et il comporte à cet effet un détecteur de courant 4 associé à un dispositif de mesure du courant 5 ; le signal fourni par le circuit 5 est envoyé sur un comparateur 6 qui reçoit par ailleurs en 7 un signal de référence de courant qui est déterminé par les conditions de travail désirées pour le moteur. Le signal obtenu est envoyé sur un module de contrôle de courant 8 dont le signal de sortie est envoyé sur un modulateur de largeur d'impulsions 9 qui est commandé par un module de commande 10.

Le module de commande 10 reçoit en particulier des signaux représentatifs des passages à zéro déphasés de trente degrés ; ces signaux sont élaborés par un module 11 qui fait l'objet de la présente invention et qui est branché en particulier sur les bornes des enroulements de phase du stator. Le modulateur 9 élabore les signaux de commande des éléments semiconducteurs de l'onduleur 3 à partir d'un signal de modulation en dents de scie à fréquence fixe, la largeur étant fonction du signal de consigne fourni par le module 8.

Enfin, un module 12 élabore des signaux spéciaux pour le démarrage du moteur qui sont envoyés au module de commande 10.

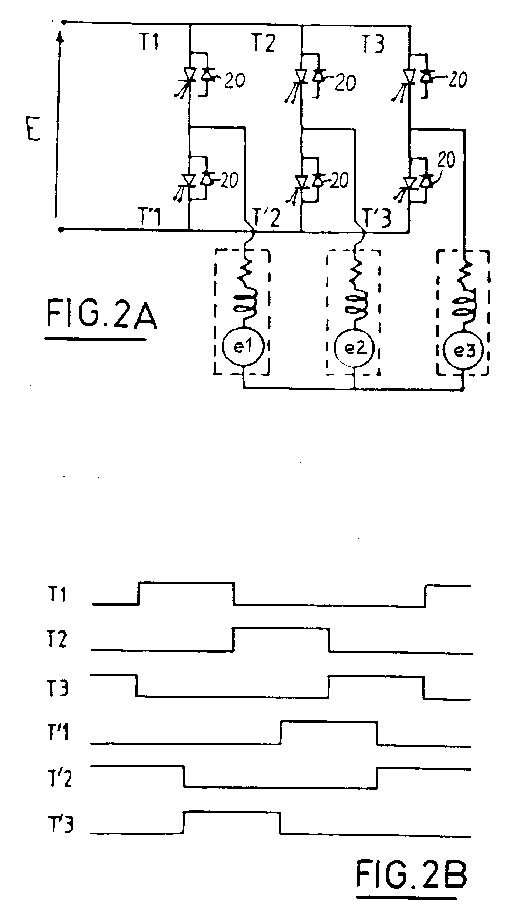

La figure 2A représente de manière schématique l'onduleur 3 qui alimente les trois enroulements de phase e1, e2 et e3 du stator de manière bidirectionnelle. L'onduleur comporte six éléments semiconducteurs à conduction et extinction commandées T1, T2, T3, T′1, T′2 et T′3 sur chacun desquels est branchée en parallèle une diode de roue libre 20 dont le sens de conduction directe est opposé au sens de conduction direct de l'élément semiconducteur commandé. Ces éléments semiconducteurs commandés peuvent par exemple être des transistors bipolaires ou des transistors de type MOS.

Sur le diagramme 2B, on a représenté les périodes de commande de conduction de chacun des semiconducteurs de l'onduleur.

Les largeurs des périodes de commande de chacun des semiconducteurs commandés correspondent chacune à 120 degrés électriques et on s'aperçoit que la période pendant laquelle on doit surveiller la force électro- motrice induite dans une phase est une période s'étendant sur soixante degrés électriques séparant la période de commande d'un semiconducteur, T1 par exemple et la période de commande du semiconducteur associé, T′1.

On peut également constater que le décalage entre un passage à zéro de la force électromotrice induite et la commande suivante d'un élément semiconducteur de l'onduleur est de trente degrés électriques. Il est donc nécessaire de réaliser un déphasage de cette valeur pour obtenir, à partir du signal représentatif du passage à zéro de la force électromotrice, les signaux de commande des éléments semiconducteurs.

On a constaté plus haut que les périodes de 60 degrés électriques pendant lesquelles il faut détecter le passage à zéro de la force électromotrice d'un enroulement correspondent à des périodes où aucun des éléments semiconducteurs associés à la phase considérée n'est commandé.

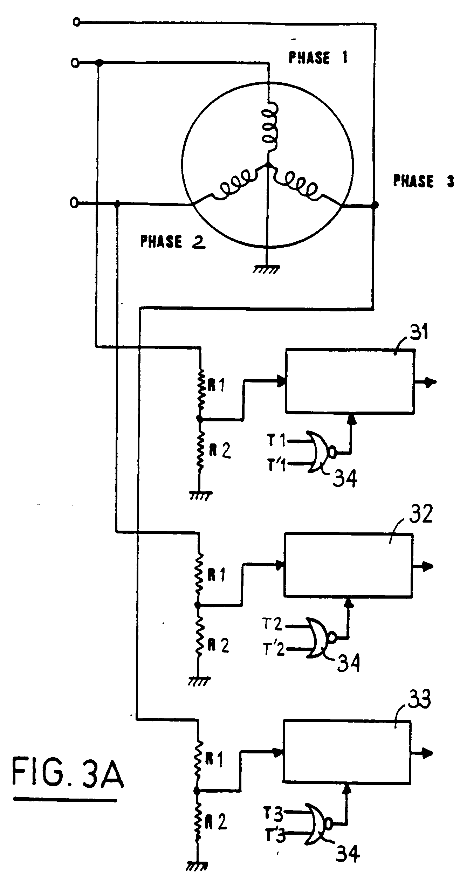

La figure 3A représente un circuit qui permet d'éliminer pour chacun des enroulements les périodes pendant lesquelles ledit enroulement est alimenté dans un sens ou dans un autre. La tension aux bornes de chaque enroulement est prélevée et envoyée sur un pont diviseur constitué de deux résistances R1 et R2 pour chaque enroulement. La tension prélevée sur le pont diviseur est envoyée sur un interrupteur analogique 31, respectivement 32 ou 33, chaque interrupteur est commandé par une porte logique NON-OU comportant deux entrées recevant chacune la tension de commande d'un semiconducteur commandé T1, respectivement T2 ou T3, et du semiconducteur commandé associé T′1, respectivement T′2 ou T′3.

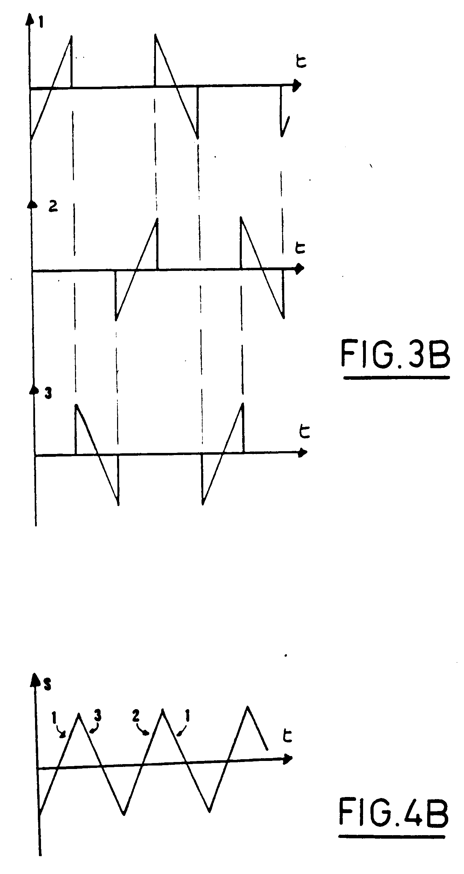

De cette manière, on trouve à la sortie des interrupteurs commandés 31, 32, 33 un signal symétrique qui correspond à la tension aux bornes de la phase considérée pendant 60 degrés électriques de part et d'autre du point de passage à zéro de la force électromotrice induite. Ainsi, on trouve sur le diagramme de la figure 3B les trois signaux fournis respectivement par les interrupteurs 31, 32 et 33.

Le circuit de la figure 3A réalise donc un masquage des périodes pendant lesquelles l'enroulement dont on surveille la tension est alimenté par l'onduleur.

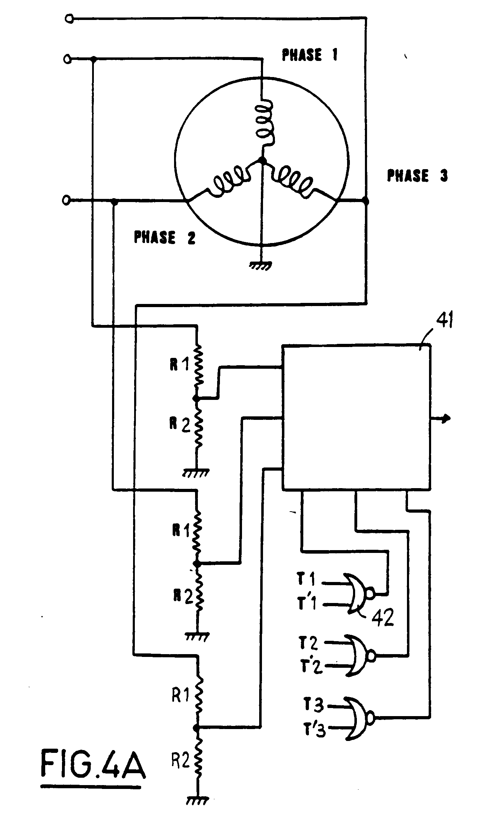

La figure 4A représente une variante de réalisation dans laquelle on élabore un signal global S dont la fréquence est le triple de la fréquence du signal de passage à zéro de la force électromotrice induite d'un enroulement. En effet, comme on peut le voir sur la figure 3B, si l'on ajoute les trois signaux de chacune des phases, on obtient le signal continu S de la figure 4B.

Dans ce mode de réalisation, on utilise un interrupteur analogique 41 qui comporte trois entrées commandées chacune séparément et une seule sortie. Chaque entrée est commandée par une porte logique NON-OU 42 analogue aux portes 34 de la figure 3A.

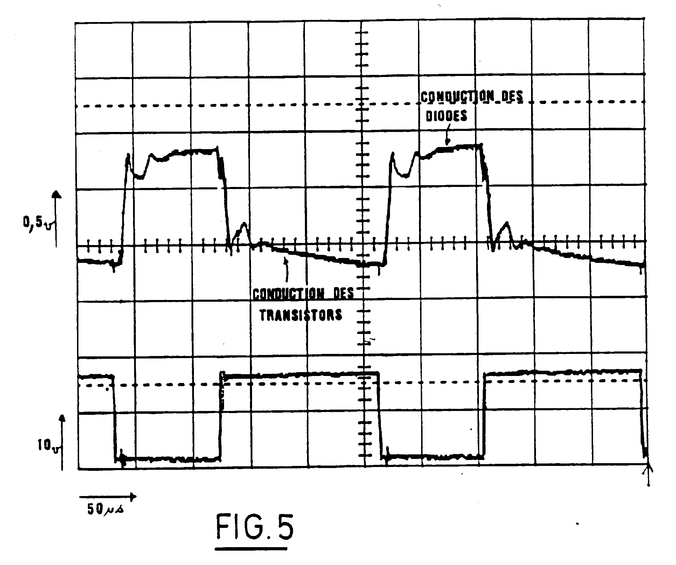

La figure 5 est une courbe montrant le détail de la tension aux bornes d'un enroulement non alimenté, la courbe du dessous représentant le signal de commande des transistors. On constate que la tension aux bornes de l'enroulement est perturbée par les tensions induites, à la fréquence de modulation, par les commutations des semiconducteurs relatifs aux autres phases. Il faut donc prévoir un filtrage du signal observé aux bornes de chaque enroulement. Ce filtrage consiste à ne prélever sur ce signal que les portions correspondant aux conductions des transistors. De plus pour éviter de capter les oscillations qui apparaissent sur ces portions à chaque commutation, on réalise ce prélèvement à travers une fenêtre de largeur adéquate.

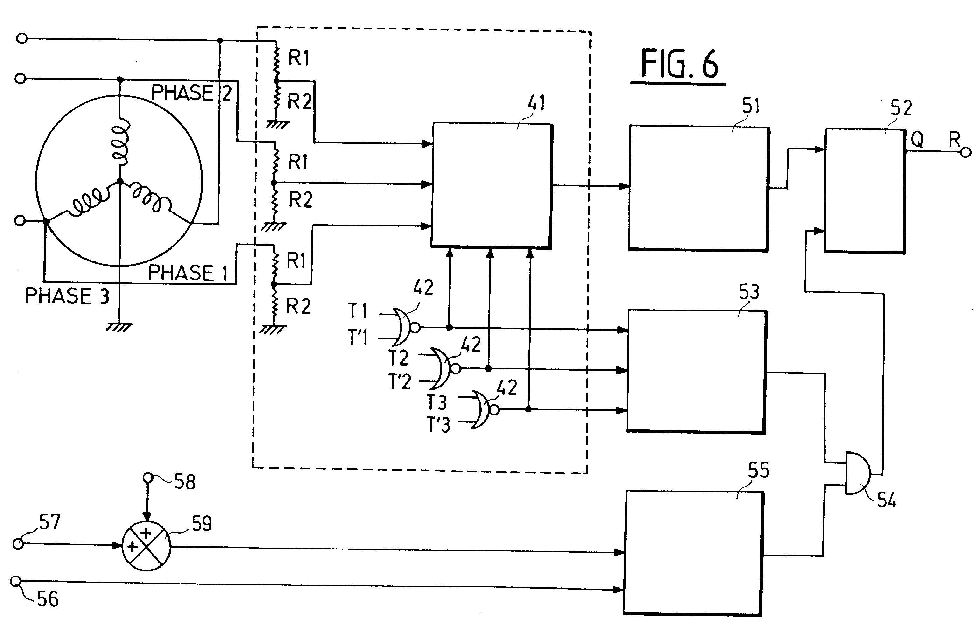

La figure 6 est un schéma synoptique du module 11 de la figure 1 qui fournit un signal représentatif du passage à zéro de la force électromotrice induite dans chacun des enroulements lorsque les deux autres sont alimentés. On retrouve sur cette figure l'interrupteur analogique à trois entrées 41 et les portes logiques NON-OU 42.

Le signal global S fourni par l'interrupteur analogique 41 est envoyé sur un amplificateur opérationnel 51 qui est monté en comparateur par rapport à la masse ; il permet de détecter la valeur positive ou négative du signal S et de fournir ainsi un niveau logique à sa sortie qui est envoyé sur une bascule de type D 52 qui constitue un élément de mémoire et est pilotée par des impulsions d'échantillonnage.

Les signaux de sortie des circuits logiques NON-OU 42 sont également envoyés sur un circuit 53 qui permet de réaliser le masquage des instants de permutation de phase du stator. La sortie de ce circuit 53 est envoyée sur une porte logique ET 54 dont l'autre entrée reçoit des impulsions d'échantillonnage fournies par un circuit 55 qui compare, d'une part le signal de modulation en dents de scie qui est appliqué en 56 et, d'autre part, le signal de commande 57 élaboré par le circuit 8 de la figure 1. Ce circuit 55 est également commandé par le signal de commande élaboré par le circuit 8 de la figure 1.

Pour déterminer une fenêtre de capture dont la largeur soit inférieure à la période de commande des transistors, on additionne le signal de commande appliqué en 57 avec une composante continue appliquée en 58 grâce à un sommateur 59.

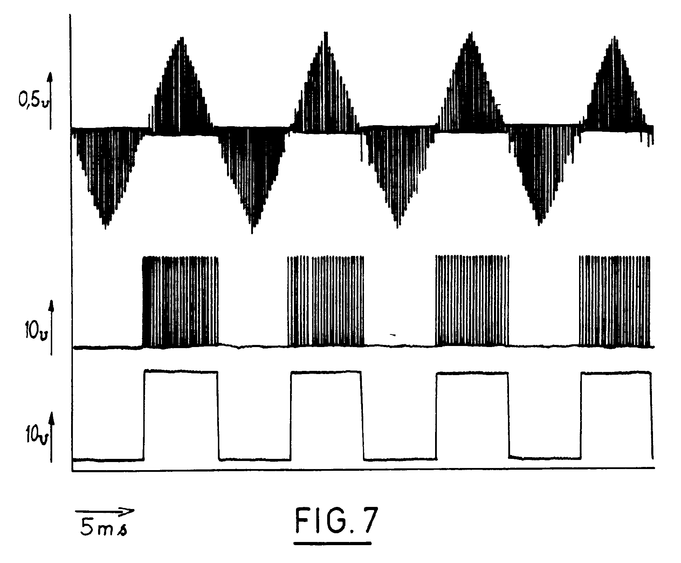

La figure 7 représente respectivement les courbes du signal global S, les impulsions d'échantillonnage et le signal fourni par la bascule de type D 52 qui est commandée par les impulsions d'échantillonnage fournies par l'intermédiaire de la porte logique 54. On voit que le signal obtenu est un signal rectangulaire dont chaque changement d'état correspond au passage par zéro de la force électromotrice induite dans chacun des enroulements ; lorsque ce signal est au niveau haut, la force électromotrice observée est positive et lorsque le signal est au niveau bas, cette force électromotrice est négative. Chaque créneau correspond à une largeur de 60 degrés électriques.

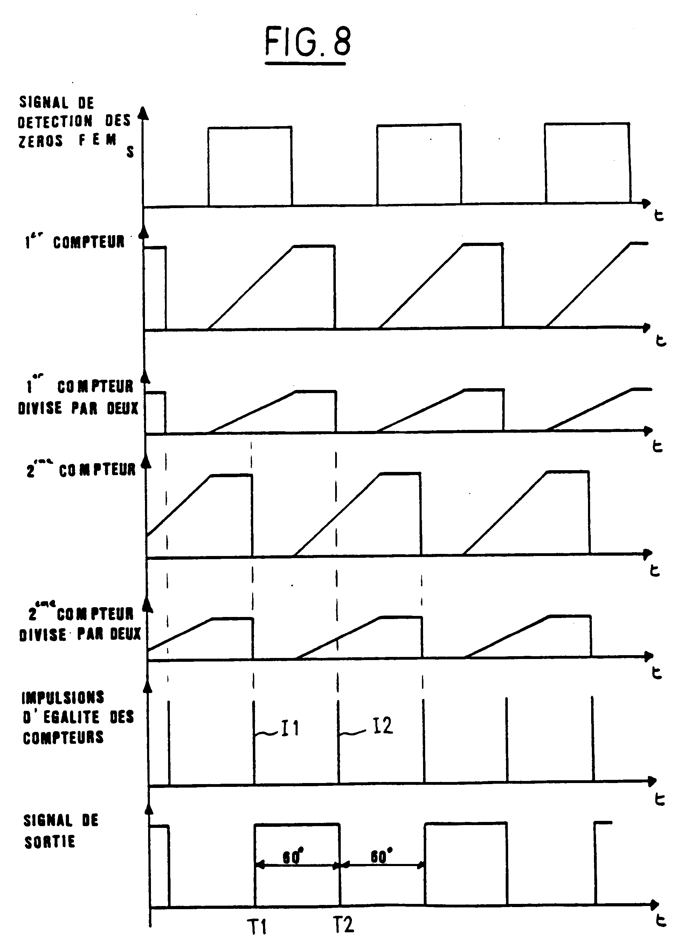

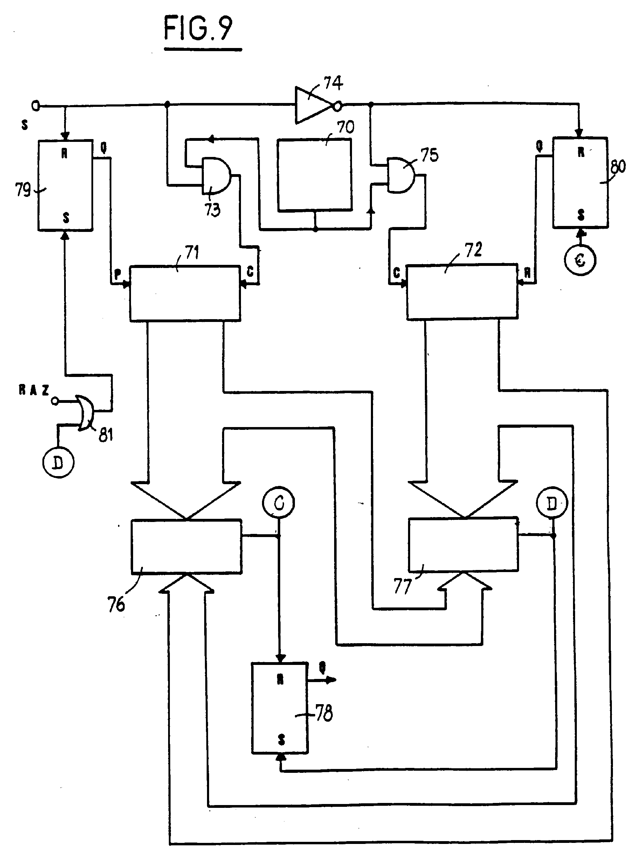

Les figures 8 et 9 illustrent le mode de réalisation du déphasage de 30 degrés électriques, qui utilise deux compteurs recevant l'un le signal direct de sortie de la bascule 52 et l'autre le signal inverse de ce dernier.

Sur le diagramme de la figure 8, les niveaux des compteurs ont été représentés de manière analogique pour des raisons de clarification. Conformément à l'invention, on compare le contenu du premier compteur divisé par deux avec le contenu du deuxième compteur et inversement.

Sur la figure 8, les différentes courbes représentent successivement le signal direct de sortie S de la bascule 52, l'état de comptage du premier compteur, cet état de comptage divisé par deux, l'état de comptage du deuxième compteur, cet état de comptage divisé par deux, les impulsions correspondant à une égalité pour l'un de ces couples de valeur de comptage et enfin le signal de sortie qui est déphasé d'une moitié de la largeur des impulsions du signal global, c'est-à-dire 30 degrés.

Ainsi par exemple, à l'instant t1, le niveau de comptage du premier compteur arrive au niveau de comptage du deuxième compteur divisé par deux ; il en résulte une impulsion 11 qui correspond au front de montée du signal déphasé. A l'instant t2, le niveau de comptage du deuxième compteur atteint le niveau de la moitié du comptage du premier compteur et il en résulte la formation d'une impulsion 12 qui correspond au front de descente du signal déphasé.

La figure 9 est le schéma synoptique d'un dispositif réalisant un tel déphasage.

Une horloge 70 de fréquence fixe fournit des impulsions d'horloge à deux compteurs 71 et 72. La transmission de ces signaux d'horloge au compteur 71 est commandée par le signal S de sortie de la bascule 52 par l'intermédiaire d'une porte ET 73 ; en ce qui concerne le compteur 72, l'envoi des impulsions d'horloge est commandé par un signal inverse du signal de sortie de la bascule 52, l'inversion étant réalisée au moyen d'un inverseur 74. La commande de la transmission des impulsions d'horloge s'effectue par l'intermédiaire d'un circuit ET 75.

Le mot de sortie de chacun des compteurs 71 et 72 qui correspond au niveau de comptage est envoyé sur un comparateur 76, respectivement 77. Chacun de ces comparateurs reçoit par ailleurs la valeur moitié du mot de sortie de l'autre compteur ; c'est-à-dire que le comparateur 76 compare le mot de sortie du compteur 71 avec le demi mot de sortie du compteur 72 et le comparateur 77 compare le mot de sortie du deuxième compteur 72 avec le demi mot de sortie du premier compteur 71. Les signaux C et D obtenus à la sortie des deux comparateurs 76 et 77 commandent de manière opposée une bascule 78 dont la sortie Q fournit le signal déphasé à 30 degrés.

On prévoit pour chaque compteur un dispositif de remise à zéro constitué par une bascule 79, respectivement 80, qui est commandée par le signal de sortie des comparateurs 77 respectivement 76. Le signal de sortie du comparateur 77 est envoyé sur la bascule 79 par l'intermédiaire d'une porte OU 81 qui reçoit sur son autre entrée un signal extérieur de remise à zéro.

On voit que l'invention permet de réaliser un filtrage efficace des signaux parasites de la force électromotrice induite de chaque enroulement grâce au procédé d'échantillonnage ; ce procédé présente une grande fiabilité et il n'introduit pas de déphasage comme le ferait un circuit de filtrage classique.

La réalisation du déphasage de 30 degrés nécessaire pour obtenir les signaux de commande des éléments semiconducteurs de l'onduleur est également obtenue de manière fiable et peu coûteuse grâce à l'utilisation de compteurs. La solution préconisée minimise au maximum les erreurs de déphasage pendant les périodes d'accélération du moteur. La fréquence de l'horloge 70 est choisie de manière à obtenir un nombre d'incréments logiques, au niveau des compteurs, qui soit suffisant pour la vitesse maximale de la machine. Ainsi on peut choisir une fréquence de 15 kHz ; en effet, pour une vitesse de 1000 t/m, 60 degrés électriques correspondent alors à 2,5 ms, ce qui donne environ 40 incréments logiques pour 60 degrés.

Pour éviter l'égalité des deux compteurs 71 et 72 lors de la mise sous tension, on impose la valeur logique "1" sur le premier compteur et la valeur "0" sur le second. De même, on inhibe la remise à zéro réalisée par le premier comparateur 76 en utilisant le signal C et le signal D est utilisé pour inhiber la remise à zéro faite par le comparateur 77.

## Revendications

1. Procédé de commande d'un moteur synchrone triphasé autopiloté (1) à rotor à aimants permanents alimenté par une source de tension continue (2) avec alimentation bidirectionnelle des enroulements du stator (e1, e2, e3), par l'intermédiaire d'un onduleur (3) comportant des éléments semiconducteurs commandés (T1, T′1, T2, T′2, T3, T′3) dont la conduction et l'extinction sont commandées en modulation de largeur d'impulsion à fréquence fixe, au moins un des enroulements du stator n'étant pas alimenté pendant que les deux autres sont alimentés, dans lequel la détection de la position du rotor en vue de la création des signaux de commande de l'onduleur (3) est obtenue par la détection du passage par zéro de la force électromotrice induite dans l'enroulement non alimenté, les signaux de commande de l'onduleur étant déphasés par rapport à l'instant dudit passage à zéro, caractérisé en ce que le signal prélevé aux bornes de chaque enroulement (e1, e2, e3) en vue de la détection du passage par zéro de la force électromotrice qu'il représente est échantillonné avec synchronisation avec la fréquence de modulation de l'onduleur.

2. Procédé de commande selon la revendication 1, caractérisé en ce que, pour la détection du passage par zéro de la force électromotrice, on réalise un masquage des périodes pendant lesquelles les semiconducteurs associés audit enroulement sont en conduction.

3. Procédé de commande selon la revendication 1 ou 2, caractérisé en ce que l'on réalise un masquage des instants de permutation de phases.

4. Procédé de commande selon l'une quelconque des revendications 1 à 3, caractérisé en ce que le signal d'échantillonnage servant à l'observation des forces électromotrices est obtenu par comparaison du signal de modulation en dents de scie avec le signal de commande issu du module de contrôle du courant, une composante continue étant ajoutée audit signal de commande.

5. Procédé de commande selon l'une quelconque des revendications 1 à 4, caractérisé en ce que le déphasage du signal de passage à zéro de la force électromotrice est obtenu par comptage d'impulsions d'horloge à fréquence fixe dans un système de deux compteurs.

6. Procédé de commande selon la revendication 5, caractérisé en ce que l'on effectue un premier comptage commandé par un signal représentatif du passage à zéro de la force électromotrice et un deuxième comptage commandé par le signal inverse dudit signal, la valeur d'un des comptages étant comparée à la demi-valeur de l'autre comptage et inversement.

7. Procédé de commande selon la revendication 2, caractérisé en ce que l'on engendre un signal unique correspondant à la succession des signaux relevés sur chaque enroulement après masquage des périodes d'alimentation de l'enroulement considéré.

8. Dispositif de détection du passage à zéro de la force électromotrice induite dans chacun des enroulements d'un moteur triphasé synchrone autopiloté, caractérisé en ce qu'il comporte une bascule (52) qui reçoit sur une de ses entrées le signal prélevé aux bornes des enroulements et qui est commandé par des impulsions d'échantillonnage obtenues à partir du signal de modulation en dents de scie de l'onduleur alimentant les enroulements du stator du moteur.

9. Dispositif selon la revendication 8, caractérisé en ce qu'il comporte, pour chacun des enroulements, un interrupteur analogique (31, 32, 33) recevant la tension prélevée sur un enroulement et commandé par un circuit logique NON-OU (34) recevant sur ses deux entrées les signaux de commande des semiconducteurs commandés associés à la phase considérée.

10. Dispositif selon la revendication 8, caractérisé en ce qu'il comporte un interrupteur analogique à trois entrées (41) recevant les tensions prélevées sur les trois enroulements et commandées par trois circuits logiques NON-OU (42).

11. Dispositif selon la revendication 10, caractérisé en ce qu'il comporte un circuit (53) de masquage des permutations de phases commandé par les circuits logiques NON-OU (42).

12. Dispositif selon l'une quelconque des revendications 8 à 11, caractérisé en ce qu'il comporte deux compteurs (71, 72) recevant l'un le signal direct de passage à zéro de la force électromotrice et l'autre le signal inverse, deux comparateurs (76, 77) recevant chacun le signal de comptage d'un compteur et le signal de comptage de l'autre compteur divisé par 2 et une bascule (78) commandée par les signaux de sortie des deux comparateurs.

13. Dispositif selon la revendication 12, caractérisé en ce que le signal de sortie de chaque comparateur (76, 77) commande la remise à zéro du compteur (72, 71) dont il reçoit la moitié du signal de comptage.

## Patentansprüche

1. Verfahren zur Steuerung eines selbstgeführten dreiphasigen Synchronmotors (1) mit einem Permanentmagnetrotor und gespeist über eine Gleichspannungsquelle (2) mit bidirektionaler Speisung der Statorwicklungen (e1, e2, e3) über einen Wechselrichter (3) mit gesteuerten Halbleiterelementen (T1, T′1, T2, T′2, T3, T′3), deren Leiten und Sperren durch Impulsbreitenmodulation von Impulsen fester Frequenz gesteuert wird, wobei wenigstens eine der Wicklungen des Stators nicht gespeist wird, während die beiden anderen gespeist werden, bei welchem die Feststellung der Position des Rotors im Hinblick auf die Erzeugung der Steuersignale für den Wechselrichter (3) durch Feststellung des Nulldurchgangs der in der nicht gespeisten Wicklung induzierten elektromotorischen Kraft gewonnen wird, wobei die Steuersignale für den Wechselrichter in Bezug auf den Zeitpunkt des Nulldurchgangs phasenverschoben sind, dadurch gekennzeichnet, daß das an den Klemmen einer jeden Wicklung (e1, e2, e3) abgenommene Signal im Hinblick auf die Feststellung des Nulldurchgangs der elektromotorischen Kraft, die es darstellt, mit Synchronisation mit der Modulationsfrequenz des Wechselrichters abgefragt wird.

2. Steuerverfahren nach Anspruch 1, dadurch gekennzeichnet, daß für die Feststellung des Nulldurchgangs der elektromotorischen Kraft eine Maskierung der Perioden, während welcher die der Wicklung zugeordneten Halbleiter in Leitung sind, vorgenommen wird.

3. Steuerverfahren nach Anspruch 1 oder 2, dadurch gekennzeichnet, daß eine Maskierung der Phasenvertauschungszeitpunkte vorgenommen wird.

4. Steuerverfahren nach irgendeinem der Ansprüche 1 bis 3, dadurch gekennzeichnet, daß das der Beobachtung der elektromotorischen Kräfte dienende Abfragesignal durch Vergleichen des Sägezahnmodulationssignals mit dem vom Stromsteuermodul abgegebenen Steuersignal gewonnen wird, wobei eine Gleichspannungskomponente dem Steuersignal hinzugefügt wird.

5. Steuerverfahren nach irgendeinem der Ansprüche 1 bis 4, dadurch gekennzeichnet, daß die Phasenverschiebung des Signals für den Nulldurchgang der elektromotorischen Kraft durch Zählung von Taktimpulsen fester Frequenz in einem System von zwei Zählern gewonnen wird.

6. Steuerverfahren nach Anspruch 5, dadurch gekennzeichnet, daß eine erste Zählung, welche durch ein den Nulldurchgang der elektromotorischen Kraft darstellendes Signal gesteuert wird, und eine zweite Zählung, welche durch das zu diesem Signal inverse Signal gesteuert wird, durchgeführt wird, wobei der Wert einer der Zählungen mit dem Halbwert der anderen Zählung verglichen wird und umgekehrt.

7. Steuerverfahren nach Anspruch 2, dadurch gekennzeichnet, daß ein einziges Signal erzeugt wird, welches der Folge der an den einzelnen Spulen abgenommenen Signale nach Maskierung der Perioden der Speisung der betrachteten Spule entspricht, erzeugt wird.

8. Vorrichtung zum Nachweis des Nulldurchgangs der in den einzelnen Spulen eines selbstgeführten dreiphasigen Synchronmotors induzierten elektromotorischen Kraft, dadurch gekennzeichnet, daß sie ein Kippglied (52) aufweist, welches auf einem seiner Eingänge das an den Wicklungsklemmen abgenommene Signal erhält und durch Abfrageimpulse gesteuert wird, welche anhand des Sägezahnmodulationssignals des die Wicklungen des Stators des Motors speisenden Wechselrichters gewonnen sind.

9. Vorrichtung nach Anspruch 8, dadurch gekennzeichnet, daß sie für jede Wicklung einen Analogschalter (31, 32, 33) aufweist, welcher die an einer Wicklung abgenommene Spannung erhält und durch ein NICHT-ODER-Glied (34) gesteuert wird, welches an seinen beiden Eingängen die Steuersignale für die der betrachteten Phase zugeordneten gesteuerten Halbleiter erhält.

10. Vorrichtung nach Anspruch 8, dadurch gekennzeichnet, daß sie einen Analogschalter (41) mit drei Eingängen aufweist, welche die an den drei Wicklungen abgenommenen Spannungen erhalten und durch drei NICHT-ODER-Glieder (42) gesteuert werden.

11. Vorrichtung nach Anspruch 10, dadurch gekennzeichnet, daß sie eine Schaltung (53) zur Maskierung der Phasenvertauschungen aufweist, die durch die NICHT-ODER-Glieder (42) gesteuert wird.

12. Vorrichtung nach irgendeinem der Ansprüche 8 bis 11, dadurch gekennzeichnet, daß sie zwei Zähler (71, 72), von welchen der eine das direkte Signal des Nulldurchgangs der elektromotorischen Kraft und der andere das inverse Signal erhält, zwei Komparatoren (76, 77), welche jeweils das Zählsignal des einen Zählers und das Zählsignal des anderen Zähler geteilt durch 2 erhalten, und ein Kippglied (78), welches durch die Ausgangssignale der beiden Komparatoren gesteuert wird, aufweist.

13. Vorrichtung nach Anspruch 12, dadurch gekennzeichnet, daß das Ausgangssignal jedes Komparators (76, 77) die Nullung des Zählers (72, 71), von dem er die Hälfte des Zählsignals erhält, steuert.

## Claims

1. Method for controlling an auto-controlled three-phase synchronous motor (1) with a permanent-magnet rotor powered by a DC voltage source (2) with two-directional supply of the stator windings (e1, e2, e3), by means of an inverter (3) including controlled semiconductor components (T1, T′1, T2, T′2, T3, T′3) the conduction and extinction of which are controlled with fixed-frequency pulse width modulation, at least one of the stator windings not being powered whilst the other two are powered, in which the detection of the position of the rotor for the purpose of creating the control signals for the inverter (3) is obtained by detecting the zero crossing of the electromotive force induced in the non-powered winding, the control signals for the inverter being shifted in phase with respect to the time of the said zero crossing, characterised in that the signal taken off at the terminals of each winding (e1, e2, e3) for the purpose of detecting the zero crossing of the electromotive force which it represents is sampled with synchronisation with the inverter modulation frequency.

2. Control method according to Claim 1, characterised in that, for the purpose of detecting the zero crossing of the electromotive force, the periods during which the semiconductors associated with the said winding are conductive are masked.

3. Control method according to Claim 1 or 2, characterised in that the phase changeover times are masked.

4. Control method according to any one of Claims 1 to 3, characterised in that the sampling signal used for observing the electromotive forces is obtained by comparing the sawtooth modulation signal with the control signal coming from the current control module, a continuous component being added to the said control signal.

5. Control method according to any one of Claims 1 to 4, characterised in that the shifting of the zero crossing signal of the electromotive force is obtained by counting fixed-frequency clock pulses in a two-counter system.

6. Control method according to Claim 5, characterised in that a first counting is carried out, controlled by a signal representing the zero crossing of the electromotive force, and a second counting controlled by the signal which is the inverse of the said signal, the value of one of the countings being compared with the half value of the other counting and vice-versa.

7. Control method according to Claim 2, characterised in that a single signal is generated corresponding to the succession of signals recorded on each winding after masking of the periods of powering the winding in question.

8. Device for detecting the zero crossing of the electromotive force induced in each of the windings of an auto-controlled synchronous three-phase motor, characterised in that it includes a flip-flop (52) which receives, at one of its inputs, the signal taken off at the terminals of the windings, and which is controlled by sampling pulses obtained from the sawtooth modulation signal of the inverter powering the windings of the motor stator.

9. Device according to Claim 8, characterised in that it includes, for each of the windings, an analogue switch (31, 32, 33) receiving the voltage taken off at a winding and controlled by a NOT-OR logic circuit (34) receiving, at its two inputs, the control signals for the controlled semiconductors associated with the phase in question.

10. Device according to Claim 8, characterised in that it includes a three-input analogue switch (41) receiving the voltages taken off at the three windings and controlled by three NOT-OR logic circuits (42).

11. Device according to Claim 10, characterised in that it includes a circuit (53) for masking the phase permutations controlled by the NOT-OR logic circuits (42).

12. Device according to any one of Claims 8 to 11, characterised in that it includes two counters (71, 72), one receiving the direct electromotive force zero crossing signal and the other the inverse signal, two comparators (76, 77) each receiving the counting signal from one counter and the counting signal from the other counter divided by 2, and a flip-flop (78) controlled by the output signals from the two comparators.

13. Device according to Claim 12, characterised in that the output signal from each comparator (76, 77) controls the resetting of the counter (72, 71) from which it receives half the counting signal.
